(19) Europäisches Patentamt
European Patent Office
Office européen des brevets

(11) **EP 2 000 440 A2**

(12) **EUROPEAN PATENT APPLICATION**
published in accordance with Art. 153(4) EPC

(43) Date of publication:
**10.12.2008 Bulletin 2008/50**

(51) Int Cl.:
*C03B 5/225* (2006.01)    *C03C 3/078* (2006.01)
*C03C 3/083* (2006.01)    *C03C 3/087* (2006.01)
*C03C 3/089* (2006.01)    *C03C 3/091* (2006.01)
*C03C 3/095* (2006.01)

(21) Application number: **07737709.1**

(22) Date of filing: **02.03.2007**

(86) International application number:
**PCT/JP2007/054088**

(87) International publication number:
**WO 2007/111079 (04.10.2007 Gazette 2007/40)**

(84) Designated Contracting States:
**BE DE FR GB**

(30) Priority: **27.03.2006 JP 2006085698**

(71) Applicant: **Asahi Glass Company, Limited**
**Chiyoda-ku**
**Tokyo 100-8405 (JP)**

(72) Inventors:
• **URATA, Shingo**
**Tokyo 100-8405 (JP)**

• **AKADA, Shuichi**
**Tokyo 100-8405 (JP)**
• **YONETSU, Hosaku**
**Tokyo 100-8405 (JP)**
• **ITOH, Hajime**
**Tokyo 100-8405 (JP)**

(74) Representative: **Müller-Boré & Partner**
**Patentanwälte**
**Grafinger Strasse 2**
**81671 München (DE)**

(54) **GLASS-MAKING PROCESS**

(57)    To provide a glass production process capable of reducing bubbles remaining in glass after production, substantially without a refiner.

A glass production process, **characterized in that** glass to be produced is soda lime glass containing water, and the process comprises a step of subjecting molten glass to reduced pressure defoaming in an atmosphere under a pressure of at most the bubble growth starting pressure $P_{eq}$ (kPa) represented by the following formula (1):

$$P_{eq} = -80.8 + 98.2 \times [\beta\text{-OH}] + 68.0 \times [SO_3] + 0.0617 \times T \quad (1)$$

wherein $[\beta\text{-OH}]$ is the $\beta$-OH value ($\text{mm}^{-1}$) of glass, $[SO_3]$ is the content (as represented by mass percentage based on oxides) of $SO_3$ in glass, and T is the temperature (°C) of the molten glass.

Fig.1

EP 2 000 440 A2

**Description**

TECHNICAL FIELD

The present invention relates to a glass production process. More specifically, it relates to a process for producing soda lime glass used as plate glass or processed glass for buildings or for vehicles.

BACKGROUND ART

For production of soda lime glass to be used as plate glass or processed glass for buildings or for vehicles, materials prepared in a predetermined blend ratio are heated and melted in a melting furnace and vitrified, and the molten glass is refined and formed into a glass sheet having a predetermined thickness by e.g. the float process. Then, this glass sheet is cut into a predetermined shape to produce plate glass for buildings or for vehicles. In the case of processed glass, the cut glass sheets are tempered and processed into laminated glass or double-glazing glass.

For refinement of the soda lime glass, salt cake ($Na_2SO_4$) is usually used, and a predetermined amount of salt cake is incorporated in the materials. However, use of salt cake as the refiner is unfavorable from the following viewpoint.

First, the sulfur oxide ($SO_X$) concentration in the exhaust gas increases, which may adversely affect the environment. Second, if the ratio of the bivalent iron oxide (FeO/(FeO and $Fe_2O_3$)) contained in the glass to be produced is high, $Na_2SO_4$ and FeO are reacted to color the glass amber.

In general, when the ratio of the bivalent iron oxide contained in the glass to be produced is increased, the infrared absorbing properties of the glass tend to improve, and thus the heat insulating properties of the glass will improve. However, there has been an upper limit to the ratio of the bivalent iron oxide contained in the glass, because of the problem of the amber coloring. Third, in the case of tempered glass, there is a problem of the spontaneous breakage caused by NiS. NiS is formed by the reaction of nickel incorporated as a coloring component in the glass and S from the salt cake. Since NiS may cause the spontaneous breakage of the tempered glass, the amount of Ni which can be contained in the glass to be produced is limited to an amount with which NiS will not cause spontaneous breakage. Fourth, selenium (Se) is used in some cases as a glass coloring component, and if the salt cake is used as the refiner for the glass, volatilization of Se during melting will be intense. Therefore, a considerable amount of Se must be introduced to the materials, compared with the Se content in the glass after production.

DISCLOSURE OF THE INVENTION

OBJECT TO BE ACCOMPLISHED BY THE INVENTION

Therefore, it is an object of the present invention to provide a glass production process, capable of reducing bubbles remaining in glass after production substantially without a refiner.

MEANS TO ACCOMPLISH THE OBJECT

To accomplish the above object, the present invention provides a glass production process, characterized in that glass to be produced contains $H_2O$ and consists essentially of, as represented by mass percentage based on the following oxides:

$SiO_2$      65 to 75%

$Al_2O_3$     0 to 3%

CaO      5 to 15%

MgO      0 to 15%

$Na_2O$      10 to 20%

$K_2O$      0 to 3%

$Li_2O$      0 to 5%

$Fe_2O_3$      0 to 3%

TiO$_2$     0 to 5%

CeO$_2$     0 to 3%

BaO     0 to 5%

SrO     0 to 5%

B$_2$O$_3$     0 to 5%

ZnO     0 to 5%

ZrO$_2$     0 to 5%

SnO$_2$     0 to 3%

SO$_3$     0 to 0.1%

and the process comprises a step of subjecting molten glass to reduced pressure defoaming in an atmosphere under a pressure of at most the bubble growth starting pressure $P_{eq}$ (kPa) represented by the following formula (1) :

$$P_{eq} = -80.8+98.2\times[\beta\text{-}OH]+68.0\times[SO_3]+0.0617\times T \qquad (1)$$

wherein [β-OH] is the β-OH value (mm$^{-1}$) of glass, [SO$_3$] is the content (as represented by mass percentage based on oxides) of SO$_3$ in glass, and T is the temperature (°C) of the molten glass.

In the glass production process of the present invention, the glass to be produced may further contain at least one member selected from the following group:

F, Cl, V, Cr, Mn, Co, Ni, Cu, Se, Mo, Ag, In, Te, La, Pr, Nd, Er, W and Au
Further, in the glass to be produced, the ratio of FeO based on the whole iron is preferably from 20 to 90%, as represented by the following formula:

$$FeO/(FeO+Fe_2O_3)\times100$$

wherein FeO and Fe$_2$O$_3$ represent contents (as represented by mass percentage based on oxides) of FeO and Fe$_2$O$_3$, respectively, as calculated as Fe$_2$O$_3$ in the glass to be produced.

In the glass production process of the present invention, the glass to be produced may contain from 0.05 to 0.5% of NiO as represented by mass percentage based on oxides.

In the glass production process of the present invention, the glass to be produced may contain Se, and in such a case, the ratio of Se remaining in the glass to be produced is preferably from 30 to 60% based on Se introduced as a glass material.

EFFECTS OF THE INVENTION

In the glass production process of the present invention, the molten glass is refined by reduced pressure defoaming, and thus no refiner such as salt cake is required. The following effects will be achieved by the unnecessity of the salt cake as the refiner.

The SO$_X$ concentration in the exhaust gas will be reduced. The standards regarding the SO$_X$ concentration in the exhaust gas are increasingly severe year after year. Glass manufacturers are always required to reduce the SO$_X$ concentration in the exhaust gas, and cope with it by providing a new exhaust gas cleaning apparatus or improving an existing exhaust gas cleaning apparatus. However, to provide a new exhaust gas cleaning apparatus or to improve an existing apparatus increases the cost for production of glass. According to the glass production process of the present invention, the SO$_X$ concentration in the exhaust gas can be reduced without e.g. an exhaust gas cleaning apparatus. Further, unnecessity of the refiner itself leads to a reduction in the glass production cost.

Even in a case where the ratio of the bivalent iron oxide contained in glass to be produced is high, no amber coloring will occur, and thus the ratio of the bivalent iron oxide contained in the glass to be produced can be increased. Thus, it is possible to produce glass excellent in infrared absorbing properties as compared with conventional glass and thus excellent in heat insulating properties.

Even when glass to be produced contains Ni, there is no fear of spontaneous breakage by NiS, and thus the amount of Ni to be contained in the glass can be increased. Thus, the variety of colors of glass to be produced will increase.

In a case where glass to be produced contains Se, volatilization of Se during melting is low. As a result, the ratio of Se remaining in the glass to be produced based on Se introduced as a glass material (hereinafter referred to as "Se remaining ratio") will increase. As Se is a very expensive material, increase of the Se remaining ratio is very preferred in view of the glass production cost.

BRIEF DESCRIPTION OF THE DRAWINGS

Fig. 1 is a graph illustrating the relation between the absolute pressure in a vacuum vessel and the diameter of bubbles in molten glass.
Fig. 2 is a cross section illustrating one example of a reduced pressure defoaming apparatus to be used for the reduced pressure defoaming method in the present invention.

MEANINGS OF SYMBOLS

1:     Reduced pressure defoaming apparatus
11:    Pressure reducing housing
12:    Reduced pressure defoaming bath
13:    Ascending pipe
14:    Downcomer
15:    Heat insulating material
20:    Melting bath
30:    Upper pit
40:    Lower pit
G:     Molten glass
P:     Pressure in the interior of reduced pressure defoaming bath

BEST MODE FOR CARRYING OUT THE INVENTION

The glass to be produced by the production process of the present invention (hereinafter referred to as "glass of the present invention") is soda lime glass to be used as plate glass or processed glass for buildings or for vehicles, and consists essentially of, as represented by mass percentage based on the following oxides:

$SiO_2$     65 to 75%

$Al_2O_3$     0 to 3%

CaO     5 to 15%

MgO     0 to 15%

$Na_2O$     10 to 20%

$K_2O$     0 to 3%

$LiO_2$     0 to 5%

$Fe_2O_3$     0 to 3%

TiO$_2$     0 to 5%

CeO$_2$     0 to 3%

BaO     0 to 5%

SrO     0 to 5%

B$_2$O$_3$     0 to 5%

ZnO     0 to 5%

ZrO$_2$     0 to 5%

SnO$_2$     0 to 3%

SO$_3$     0 to 0.1%

The above components will be described below.

SiO$_2$ is a network former and is essential. If the SiO$_2$ content is less than 65%, weather resistance tends to deteriorate, and if it exceeds 75%, the viscosity tends to be high, and melting will be difficult. The SiO$_2$ content is more preferably from 68 to 73%.

Al$_2$O$_3$ is not essential, but may be incorporated up to 3% in order to improve weather resistance. If its content exceeds 3%, melting properties tend to decrease. The Al$_2$O$_3$ content is preferably at least 0.1% in view of weather resistance. The Al$_2$O$_3$ content is more preferably from 0.7 to 2.2%.

CaO is a component to accelerate melting of materials and to improve weather resistance and is essential. If the CaO content is less than 5%, the above effects tend to be small, and if it exceeds 15%, the glass tends to devitrify. The CaO content is more preferably from 7.0 to 12.0%.

MgO is a component to accelerate melting of the materials and to improve weather resistance, and may be incorporated up to 15%. If its content exceeds 15%, the glass is likely to devitrify. In order to obtain the above-described effects, it is preferably incorporated in an amount of at least 1%. The MgO content is more preferably from 2.0 to 7.0%.

Na$_2$O is a component to accelerate melting of materials and is essential. If its content is less than 10%, the above effects tend to be small, and if its content exceeds 20%, weather resistance tends to deteriorate. The Na$_2$O content is more preferably from 12.0 to 15.0%.

K$_2$O is a component to accelerate melting of materials and may be incorporated up to 3%. If its content exceeds 3%, weather resistance tends to deteriorate. To obtain the above effect, it is preferably incorporated in an amount of at least 0.2%. The K$_2$O content is more preferably from 0.4 to 1.6%.

Li$_2$O is a component to accelerate melting of materials and may be incorporated up to 5%. If its content exceeds 5%, weather resistance tends to deteriorate. The Li$_2$O content is more preferably at most 1%.

Fe$_2$O$_3$ is not essential, but may be incorporated up to 3%, since it is a component to improve light absorbing properties, particularly infrared absorbing properties and ultraviolet absorbing properties of glass to be produced and is a glass coloring component. If its content exceeds 3%, radiant heat tends to be shielded at the time of melting, the heat will hardly arrive at the interior, and it will be difficult to melt materials.

For the above effect, Fe$_2$O$_3$ is preferably incorporated in an amount of at least 0.005%. The Fe$_2$O$_3$ content is more preferably from 0.010 to 1.5%.

In this specification, the total amount of iron oxides in glass to be produced is represented by the amount of Fe$_2$O$_3$ in accordance with standard method of analysis, but not all iron oxides present in glass are present in the form of Fe$_2$O$_3$. Usually, glass contains bivalent iron oxide (FeO) in addition to Fe$_2$O$_3$. Regarding the infrared absorbing properties, FeO is superior to Fe$_2$O$_3$. Thus, in order to improve the infrared absorbing properties of glass, it is preferred to increase the ratio (%) of FeO based on the whole iron as represented by the following formula, in the glass to be produced:

$$FeO/(FeO+Fe_2O_3) \times 100$$

wherein FeO and Fe$_2$O$_3$ represent contents (as represented by mass percentage based on oxides) of FeO and Fe$_2$O$_3$, respectively, as calculated as Fe$_2$O$_3$ in the glass to be produced.

Hereinafter in this specification, the ratio of FeO based on the whole iron represented by the above formula will be referred to as "the ratio of FeO based on the whole iron".

However, heretofore, since salt cake has been used as a refiner, the ratio of FeO based on the whole iron can not be increased to 40% or more in view of the amber coloring problem.

As described hereinafter in detail, since no refiner such as salt cake is used in the production process of the present invention, the ratio of FeO based on the whole iron can be increased as compared with a conventional process, and it can be increased to 40% or more, specifically, from 40 to 90%.

In the glass to be produced by the present invention, the ratio of FeO based on the whole iron is preferably from 20 to 90%. When the ratio of FeO based on the whole iron is from 20 to 90%, the glass to be produced will be excellent in infrared absorbing properties.

The ratio of FeO based on the whole iron is more preferably from 25 to 55%, furthermore preferably from 30 to 50%.

$TiO_2$ is not essential, but may be incorporated up to 5% to adjust the light transmittance of the glass to be produced, specifically, the visible light transmittance and the ultraviolet transmittance. Even if its content exceeds 5%, such will no more contribute to adjustment of the light transmittance, such being unfavorable in view of cost. Further, when glass is formed by the float process, $TiO_2$ will react with molten tin in the float bath, and no glass having desired color tone will be obtained.

For the purpose of adjusting the light transmittance, $TiO_2$ is incorporated preferably in an amount of from 0.05 to 4.5%, more preferably from 0.1 to 4.2%.

$CeO_2$ is not essential, but may be incorporated up to 3% to improve the ultraviolet absorbing properties of the glass to be produced. If its content exceeds 3%, the glass is likely to have ream defects. In order to improve the ultraviolet absorbing properties of the glass to be produced, $CeO_2$ is incorporated preferably in an amount of from 0.05 to 2.0%, more preferably from 0.1 to 1.8%.

BaO and SrO are not essential, but may be incorporated up to 5% to improve melting properties. If the content of each of them exceeds 5%, the glass is likely to devitrify. The BaO and SrO contents are preferably at most 2%.

ZnO is not essential, but may be incorporated up to 5% to improve weather resistance. If its content exceeds 5%, the coefficient of thermal expansion of the glass tends to decrease, whereby the glass will hardly be tempered by air cooling. The ZnO content is more preferably at most 1%.

$ZrO_2$ is not essential, but may be incorporated up to 5% to improve the modulus of the glass. If its content exceeds 5%, it tends to be difficult to melt materials. The $ZrO_2$ content is more preferably at most 1%.

$B_2O_3$ is not essential, but may be incorporated up to 5% to improve melting properties. If the $B_2O_3$ content exceeds 5%, the softening point tends to be low. It is preferably at most 1%.

$SnO_2$ is not essential, but may be incorporated up to 3% for the purpose of adjusting the ratio of FeO based on the whole iron. If it exceeds 3%, the glass is likely to have ream defects. The $SnO_2$ content is preferably at most 1%.

In the present invention, since substantially no salt cake as a refiner is used, it is not necessary to incorporate $SO_3$ (as the salt cake) in the glass to be produced. However, the materials contain $SO_3$ as an inevitable impurity. Further, $SO_3$ has an effect of increasing the melting properties of materials, and accordingly a very small amount of $SO_3$ may be incorporated so as to increase the melting properties. In such a case, the content of $SO_3$ is at most 0.1%. However, the glass to be produced preferably contains no $SO_3$ other than the inevitable impurity.

In the after-mentioned formula (1), $[SO_3]$ representing the content of $SO_3$ in the glass is a value obtained based on a plate molded from the molten glass before the reduced pressure defoaming, as same as the after-mentioned $[\beta\text{-}OH]$. $[SO_3]$ as determined above is substantially the same as a value determined based on a plate molded from the molten glass after the reduced pressure defoaming.

The glass of the present invention may contain, as an optional component, at least one member selected from the following group in addition to the above components:

F, Cl, V, Cr, Mn, Co, Ni, Cu, Se, Mo, Ag, In, Te, La, Pr, Nd, Er, W and Au
F and Cl may be incorporated for the purpose of accelerating melting of materials. Further, V, Cr, Mn, Co, Cu, Mo, Ag, In, Te, La, Pr, Nd, Er, W and Au may be incorporated as a light absorbing component.

Ni is incorporated in the form of NiO as a glass coloring component. In the present invention, since no refiner such as salt cake is used, spontaneous breakage caused by NiS will not occur even though the NiO content in the glass is increased. Accordingly, the NiO content in the glass can be increased as compared with conventional one, and NiO can be incorporated up to 0.5%, whereby the degree of freedom of coloring of the glass will increase. This effect is significant particularly for glass for vehicles, for which various colorings are required. If its content exceeds 0.5%, NiO will react with molten tin in the float bath, whereby no glass having a desired color tone may be obtained. For the above effect, NiO is incorporated preferably in an amount of from 0.005 to 0.3%, more preferably from 0.05 to 0.1%.

Se may be incorporated up to 0.05% as a glass coloring component. Even though its content exceeds 0.05%, such will no longer contribute to color tone correction, such being unfavorable in view of cost. For the above effect, Se is incorporated preferably in an amount of at most 0.01%, more preferably at most 0.005%.

In the present invention, since no refiner such as salt cake is used, volatilization of Se during melting is small, and excellent Se remaining ratio is obtained. In the present invention, the Se remaining ratio is from 30 to 60% as represented by the following formula:

$$\text{Se remaining ratio (\%)} = \{(\text{Se content (g) in produced glass})/(\text{amount (g) of Se introduced as a material})\} \times 100$$

The glass of the present invention contains, in addition to the above components, water as an essential component. Water is a component to refine the glass, which expands bubbles in the after-mentioned reduced pressure defoaming step to increase the bubbles-floating rate to accelerate defoaming. Water in the glass results from hydroxyl groups in the materials, water in the materials, water in the atmosphere in which the glass is melted, etc.

In the present invention, as an index of the water content in the glass, the $\beta$-OH value of the glass is employed. The $\beta$-OH ($mm^{-1}$) value of the glass is determined by measuring the absorbance of a glass sample to light having a wavelength of from 2.75 to 2.95 $\mu$m, and dividing the maximum value $\beta_{max}$ by the thickness (mm) of the sample.

As the glass sample to be used to determine the $\beta$-OH value, a plate molded from the molten glass before the reduced pressure defoaming is used.

The $\beta$-OH value of the glass is preferably from 0.1 to 0.5 $mm^{-1}$. The $\beta$-OH value is controlled by the water content in the materials, the water vapor concentration in the melting bath, and the retention time of the molten glass in the melting bath. When the materials and the burning atmosphere are constant, the $\beta$-OH value depends on the retention time, and increases along with the increase in the retention time. In order that the glass is homogeneously melted, a certain retention time is required in the melting bath. If the retention time is short, the glass tends to be inhomogeneous, and if it is too long, the fuel will be wasted. When common - industrial materials are used in a burning atmosphere of natural gas or heavy oil, if the $\beta$-OH value of the glass is within the above range, the retention time in the melting bath is proper, and homogeneous molten glass will be obtained efficiently. The $\beta$-OH value of the glass is more preferably from 0.15 to 0.4 $mm^{-1}$.

Further, it is possible to determine the water content W (wt%) of the glass from the $\beta$-OH value of the glass from the following formula:

$$W = 18 \times [\beta\text{-OH}]/(\varepsilon\rho)$$

wherein $\rho$ is the density ($g/cm^3$) of a glass sample, and $\varepsilon$ is the molar absorptivity (l/mol·cm). The molar absorptivity varies depending upon the glass composition, but usually $\varepsilon$=73 (l/mol·cm) in the case of soda lime glass.

Thus, in a case where the $\beta$-OH value of the glass is from 0.1 to 0.5 $mm^{-1}$, the water content W of the glass is from 0.010 to 0.049 wt%.

However, as described above, the $\beta$-OH value of the glass is a value determined by using a plate molded from the molten glass before the reduced pressure defoaming, the water content W of the glass determined by the above formula is a value regarding the glass before the reduced pressure defoaming and is slightly different from the water content W' of the glass after the reduced pressure defoaming. In a case where the water content W of the glass before the reduced pressure defoaming is from 0.010 to 0.049 wt%, the water content W' of the glass after the reduced pressure defoaming is usually from 0.007 to 0.045 wt%.

As described above, the $\beta$-OH value of the glass is controlled by the water content in the materials, the water vapor concentration in the melting bath and the retention time of the molten glass in the melting bath. Thus, these parameters should be adjusted so as to adjust the $\beta$-OH value of the glass. For example, in a case where the $\beta$-OH value of the glass is to be increased, water should be added to the materials, the water vapor concentration in the melting bath should be increased, or the retention time of the molten glass in the melting bath should be prolonged. As a method of increasing the water vapor concentration in the melting bath, for example, fuel is burned by oxygen gas having an oxygen concentration of at least 90 vol%, i.e. so-called total oxygen combustion may be mentioned.

To obtain molten glass, materials such as silica sand, boric acid and limestone are formulated and mixed in accordance with the composition of a final glass product, and the obtained batch is introduced to the melting bath, then heated and melted at about 1,400°C or above depending upon the type of the glass. On that occasion, fuel such as heavy oil or natural gas is burned as a heat source. The fuel such as heavy oil or natural gas is burned as mixed with oxygen in some cases, or burned as mixed with air in other cases. When it is burned as mixed with oxygen, the amount of water vapor contained in the gas after combustion tends to be large. Specifically, the amount of water vapor contained in the gas after combustion is about 3.5 times that when the fuel is burned as mixed with air. That is, when the fuel is burned as mixed with oxygen, water vapor in an amount of about 3.5 times that when the fuel is burned as mixed with air, is present in the melting bath. On the other hand, in a case where the $\beta$-OH value of the glass is to be low, the water vapor concentration in the melting bath should be lowered, or the retention time of the molten glass in the melting bath should be shortened. As a method of lowering the water vapor concentration in the melting bath, a method of burning fuel such as heavy oil or natural gas as mixed with air may be mentioned. Further, in a case where an electric furnace is used to heat and melt the materials, the $\beta$-OH value of the glass can be adjusted by adjusting the water vapor partial pressure in the electric furnace.

The production process of the present invention comprises a step of subjecting molten glass to reduced pressure defoaming in an atmosphere under a pressure of at most the bubble growth starting pressure $P_{eq}$ (kPa) represented by the following formula (1), without using a refiner such as salt cake:

$$P_{eq} = -80.8 + 98.2 \times [\beta\text{-OH}] + 68.0 \times [SO_3] + 0.0617 \times T \qquad (1)$$

wherein [$\beta$-OH] is the $\beta$-OH value (mm$^{-1}$) of glass, [$SO_3$] is the content (as represented by mass percentage based on oxides) of $SO_3$ in glass, and T is the temperature (°C) of the molten glass.

It is considered that the bubble growth starting pressure depends on [$\beta$-OH] and [$SO_3$] because the respective components have influences over the growth of bubbles under a specific pressure or below, depending upon their concentrations.

Here, the bubble growth starting pressure $P_{eq}$ is defined as follows.

When the pressure of an atmosphere in which the reduced pressure defoaming is carried out (usually the atmosphere in a reduced pressure defoaming bath of a reduced pressure defoaming apparatus) is reduced at a constant temperature, the volume of bubbles (the diameter of bubbles) present in the molten glass in the atmosphere increases in accordance with the Boyle's law. However, when the pressure of the atmosphere is reduced to a certain pressure, the volume of bubbles (the diameter of bubbles) in the molten glass rapidly increases out of the Boyle's law. This pressure will be referred to as the bubble growth starting pressure $P_{eq}$. The bubble growth starting pressure $P_{eq}$ can be determined as follows.

In order to reproduce an atmosphere in which reduced pressure defoaming is conducted, a crucible in which glass materials are put is disposed in a vacuum vessel. The crucible is heated to a predetermined temperature (for example, 1,300°C) to melt glass. After the glass is completely melted, while the vacuum vessel is depressurized, the diameter of bubbles in the molten glass is observed. To observe the diameter of bubbles in the molten glass, for example, bubbles in the molten glass are photographed by using a CCD camera through an inspection window provided on the vacuum vessel.

As the pressure in the vacuum vessel is reduced, the diameter of bubbles in the molten glass increases in accordance with Boyle's law. However, when the pressure in the vacuum vessel is reduced to a certain pressure, the diameter of bubbles in the molten glass rapidly increases out of Boyle's law. The pressure in the vacuum vessel at that time is taken as the bubble growth starting pressure $P_{eq}$.

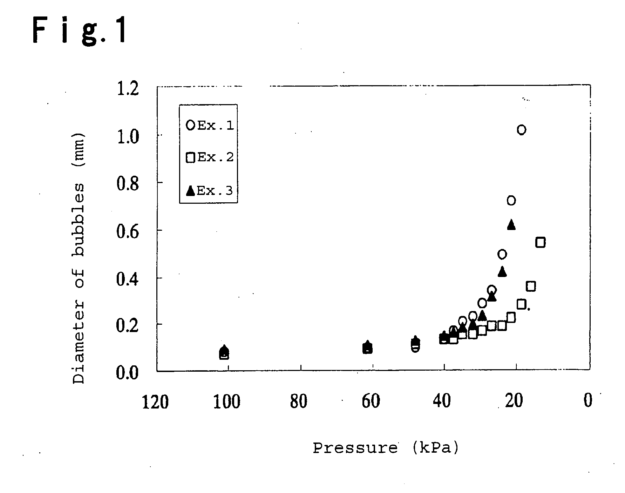

The above operation was conducted changing the $\beta$-OH value and the temperature of the molten glass, and the results are shown in Table 1 and Fig. 1.

TABLE 1

|  | Example 1 | Example 2 | Example 3 |
|---|---|---|---|
| T[°C] | 1,290 | 1,290 | 1,350 |
| $\beta$-OH [mm$^{-1}$] | 0.292 | 0.272 | 0.280 |
| $SO_3$ [wt%] | 0.04 | 0.013 | 0.006 |

(continued)

| | Example 1 | | Example 2 | | Example 3 | |
|---|---|---|---|---|---|---|
| | P[kPa] | D[mm] | P[kPa] | D[mm] | P[kPa] | D [mm] |
| | 101.3 | 0.08 | 101.3 | 0.07 | 101.3 | 0.09 |
| | 61.3 | 0.09 | 61.3 | 0.09 | 61.3 | 0.11 |
| | 48.0 | 0.09 | 48.0 | 0.11 | 48.0 | 0.13 |
| | 40.0 | 0.13 | 40.0 | 0.13 | 40.0 | 0.15 |
| | 37.3 | 0.17 | 37.3 | 0.13 | 37.3 | 0.16 |
| | 34.7 | 0.20 | 34.7 | 0.15 | 34.7 | 0.18 |
| | 32.0 | 0.23 | 32.0 | 0.15 | 32.0 | 0.20 |
| | 29.3 | 0.28 | 29.3 | 0.17 | 29.3 | 0.23 |
| | 26.7 | 0.34 | 26.7 | 0.19 | 26.7 | 0.31 |
| | 24.0 | 0.49 | 24.0 | 0.19 | 24.0 | 0.42 |
| | 21.3 | 0.71 | 21.3 | 0.22 | 21.3 | 0.62 |
| | 18.7 | 1.01 | 18.7 | 0.28 | | |
| | | | 16.0 | 0.35 | | |
| | | | 13.3 | 0.54 | | |
| $P_{eq}$ [kPa] | 30.2 | | 26.4 | | 30.4 | |

In the above Table, T is the temperature (°C) of the molten glass. β-OH is the β-OH value (mm$^{-1}$) of glass. $SO_3$ is the content (as represented by mass percentage based on oxides) of $SO_3$ in glass. D is the diameter (mm) of a bubble optionally selected from bubbles with a representative size accounting for the largest number of bubbles. P is the absolute pressure (kPa) in the vacuum vessel. $P_{eq}$ is the bubble growth starting pressure (kPa) determined by the above procedure.

The composition (as represented by mass percentage based on oxides) of the glass used was as follows.

$SiO_2$: 70.6%, $Al_2O_3$: 1.9%, Cato: 8.8%, MgO: 4.4%, $Na_2O$: 13.1%, $K_2O$: 0.7%, $Li_2O$: 0%, $Fe_2O_3$: 0.54%, $TiO_2$: less than 0.01%, $CeO_2$: 0%, BaO: 0%, SrO: 0%, $B_2O_3$: 0%, ZnO: 0%, $ZrO_2$: 0%, $SnO_2$: 0% and $SO_3$: 0.006 to 0.04%.

The above formula (1) is introduced as a regression formula of the β-OH value and the temperature of the molten glass from the results shown in Table 1.

By reduced pressure defoaming of molten glass in an atmosphere under a pressure of at most the bubble growth starting pressure $P_{eq}$ (kPa) represented by the above formula (1), the rate of influx of gas components such as $H_2O$, $O_2$ and $CO_2$ dissolved in the molten glass into bubbles remarkably increases, whereby the radius of bubbles increase, and the bubbles-floating rate increases. On that occasion, $H_2O$ among the above gas components is a dominant factor. As a result, the time over which the bubbles reach the surface of the molten glass is remarkably shortened, and the reduced pressure defoaming is accelerated.

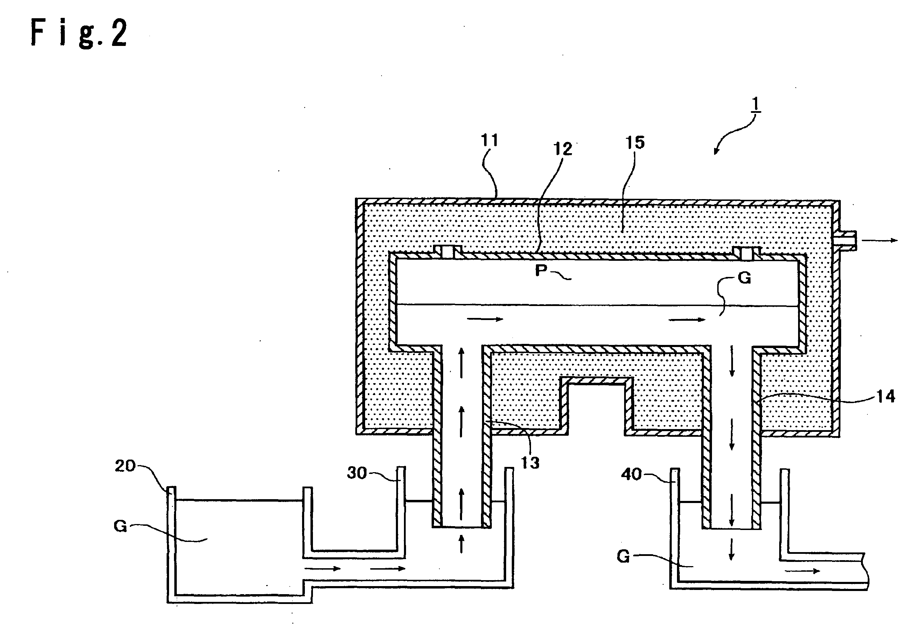

Fig. 2 is a cross section illustrating one example of a reduced pressure defoaming apparatus used in the present invention. In a reduced pressure defoaming apparatus 1 shown in Fig. 1, a reduced pressure defoaming bath 12 having a cylindrical shape is accommodated in a pressure reducing housing 11 so that the major axis of the bath is in the horizontal direction. An ascending pipe 13 is disposed in the vertical direction at the bottom of one end of the reduced pressure defoaming bath 12, and a downcomer 14 is disposed on the bottom of the other end. Parts of the ascending pipe 13 and the downcomer 14 are disposed in the pressure reducing housing 11.

The ascending pipe 13 communicates with the reduced pressure defoaming bath 12 and is an introduction means to introduce molten glassG from a melting bath 20 into the reduced pressure defoaming bath 12. Accordingly, the lower end portion of the ascending pipe 13 is inserted into an open end of an upper pit 30 and is immersed in molten glass G in the upper pit 30.

The downcomer 14 communicates with the reduced pressure defoaming bath 12 and is a discharging means to make molten glass G after the reduced pressure defoaming flow down from the reduced pressure defoaming bath 12 to discharge it into the subsequent treatment bath (not shown). Accordingly, the lower end portion of the downcomer 14 is inserted into an open end of a lower pit 40 and is immersed in molten glass G in the lower pit 40.

In the pressure reducing housing 11, around the periphery of the reduced pressure defoaming bath 12, the ascending pipe 13 and the downcomer 14, a heat insulating material 15 such as insulating bricks is provided to cover and insulate them.

In the reduced pressure defoaming apparatus 1 shown in Fig. 2, the reduced pressure defoaming bath 12, the ascending pipe 13 and the downcomer 14 are ducts for molten glass, and thereby made of a material excellent in heat resistance and corrosion resistance to molten glass. For example, a hollow tube made of platinum or a platinum alloy may be mentioned. Specifically, the platinum alloy may, for example, be a platinum-gold alloy or a platinum-rhodium alloy. Further, as another example, a hollow tube made of a ceramic type non-metallic inorganic material i.e. made of dense refractories. Specific examples of the dense refractories include electrocast refractories such as alumina electrocast refractories, zirconia electrocast refractories and alumina-zirconia-silica electrocast refractories, and dense fired refractories such as dense alumina refractories, dense zirconia-silica refractories and dense alumina-zirconia-silica refractories.

In the production process of the present invention, in order that molten glass is subjected to reduced pressure defoaming in an atmosphere under a pressure of at most the bubble growth starting pressure $P_{eq}$ represented by the above formula (1), molten glass G is made to flow in the reduced pressure defoaming bath 12 in a state where the pressure P in the interior of the reduced pressure defoaming bath 12 is kept to be at most the bubble growth starting pressure $P_{eq}$. In such a case, T in the formula (1) is the temperature (°C) of molten glass flowing in the reduced pressure defoaming bath 12.

At the time of carrying out the reduced pressure defoaming, the pressure reducing housing 11 is evacuated of air by an outside pressure reducing means (not shown) such as a vacuum pump, whereby the reduced pressure defoaming bath 12 accommodate in the pressure reducing housing 11 is indirectly evacuated of air, and the reduced pressure defoaming bath 12 is depressurized. In such a manner, the pressure P in the interior of the reduced pressure defoaming bath 12 can be kept to be at most the bubble growth starting pressure $P_{eq}$.

The temperature of molten glass G flowing in the reduced pressure defoaming bath 12 is not necessarily constant and varies depending upon the site in the reduced pressure defoaming bath 12. For example, the temperature of molten glassG is different between at the upper portion and at the lower portion of the reduced pressure defoaming bath 12. In the present invention, as the temperature T in the formula (1), the average temperature of molten glass G flowing in the reduced pressure defoaming bath 12 is employed. The average temperature is the average of the temperature at the upper portion of the reduced pressure defoaming bath 12 (for example, the temperature of molten glass G entering the reduced pressure defoaming bath 12 from the ascending pipe 13) and the temperature at the lower portion (for example, the temperature of molten glass G entering the downcomer 14 from the reduced pressure defoaming bath 12).

The average temperature of molten glass G flowing in the reduced pressure defoaming bath 12 is preferably from 1,050 to 1,350°C. In the case of the above defined glass composition, the viscosity of molten glass G is.from 200 to 6,500 poise at a temperature of from 1,050 to 1,350°C. When the viscosity of molten glass G is within the above range, the flow of molten glass G in the reduced pressure defoaming bath 12 will not be significantly slow, and molten glass G will not leak through a joint in the reduced pressure defoaming bath 12.

In a case where the reduced pressure defoaming bath 12 is a hollow tube made of platinum or a platinum alloy, it has a joint of platinum or a platinum alloy. In a case where the viscosity of molten glass G flowing in the reduced pressure defoaming bath 12 is low, specifically, in a case where it is less than 200 poise, molten glass may leak through such a joint. Further, in a case where the reduced pressure defoaming bath 12 is a hollow tube made of dense refractories, molten glass may leak through joints of the dense refractories in the same manner as above.

Molten glass G subjected to reduced pressure defoaming by flowing in the reduced pressure defoaming bath 12 moves from the downcomer 14 via the lower pit 40 to the subsequent treatment bath (not shown). Then, it is formed into plate glass for buildings or for vehicles by a predetermined forming process such as a float forming process, a roll out forming process or a fusion forming process, and if desired, the plate glass is further processed into processed glass.

EXAMPLES

Now, the present invention will be described in further detail with reference to Examples. However, it should be understood that the present invention is by no means restricted to such specific Examples.

EXAMPLES 1 to 3

In order to reproduce an atmosphere in which reduced pressure defoaming is conducted, a platinum crucible in which glass materials were put was disposed in a vacuum vessel. The crucible was heated to melt the glass materials, and the temperature of molten glass was adjusted to the temperature T (°C) as identified in Table 2. Then, the absolute pressure in the interior of the vacuum vessel was adjusted to the pressure P (kPa) as identified in Table 2. In such a state, bubbles in the molten glass were photographed by using a CCD camera through an inspection window provided on the vacuum vessel, and the number of bubbles with diameters of at least 0.016 mm were counted to determine the bubble density (bubbles/kg) of the molten glass. The mass of the molten glass was 5.0 kg. The bubble density was determined by counting the number of bubbles present in a solidified sample.

In Table 2, $P_{eq}$ is the bubble growth starting pressure (kPa) determined by using the above formula (1). $\beta$-OH and $SO_3$ are as defined above. $P_{eq}$-P is the difference between them. The results are shown in Table 2.

The composition (as represented by mass percentage based on oxides) of the glass used was such that $SiO_2$: 71.2%, $Al_2O_3$: 1.8%, CaO: 8.4%, MgO: 4.5%, $Na_2O$: 12.8%, $K_2O$: 0.7%, $Fe_2O_3$: 0.49%, $TiO_2$: 0.03% and $SO_3$: 0.01%, and the ratio of FeO based on the whole iron was 57.4%.

TABLE 2

|  | T [°C] | $\beta$-OH [mm$^{-1}$] | $SO_3$ [wt%] | $P_{eq}$ [kPa] | P [kPa] | $P_{eq}$-P [kPa] | Bubble density [bubbles/kg] |
|---|---|---|---|---|---|---|---|
| Ex. 1 | 1,339 | 0.279 | 0.016 | 30.3 | 24 | 6.3 | 0.02 |
| Ex. 2 | 1,323 | 0.272 | 0.013 | 28.4 | 24 | 4.4 | 0.09 |
| Ex. 3 | 1,304 | 0.271 | 0.013 | 27.2 | 26 | 1.2 | 0.25 |

As is evident from the results shown in Table 2, in Examples 1 to 3 wherein the pressure P in the interior of the vacuum vessel was at most the bubble growth starting pressure $P_{eq}$, results of the bubble density equal to or lower than a usual bubble density of 0.25 (bubbles/kg) in a case where salt cake ($Na_2SO_4$) is used as a refiner without using the reduced pressure defoaming method of the present invention, were obtained even though no salt cake ($Na_2SO_4$) was used as a refiner. Further, in Examples 1 and 2, the bubble density of the molten glass is at most 0.1 (bubbles/kg), and the obtained glass can be used particularly preferably as plate glass for buildings and for vehicles.

INDUSTRIAL APPLICABILITY

The present invention is suitable as a process for producing soda lime glass to be used as plate glass or processed glass for buildings or for vehicles, and according to the present invention, plate glass with few bubbles can be produced at a low cost.

The entire disclosure of Japanese Patent Application No. 2006-85698 filed on March 27, 2006 including specification, claims, drawings and summary is incorporated herein by reference in its entirety.

**Claims**

**1.** A glass production process, **characterized in that** glass to be produced contains water and consists essentially of, as represented by mass percentage based on the following oxides:

$SiO_2$ 65 to 75%
$Al_2O_3$ 0 to 3%
CaO 5 to 15%
MgO 0 to 15%
$Na_2O$ 10 to 20%
$K_2O$ 0 to 3%
$Li_2O$ 0 to 5%
$Fe_2O_3$ 0 to 3%
$TiO_2$ 0 to 5%
$CeO_2$ 0 to 3%
BaO 0 to 5%
SrO 0 to 5%
$B_2O_3$ 0 to 5%
ZnO 0 to 5%
$ZrO_2$ 0 to 5%
$SnO_2$ 0 to 3%
$SO_3$ 0 to 0.1%

and the process comprises a step of subjecting molten glass to reduced pressure defoaming in an atmosphere under a pressure of at most the bubble growth starting pressure $P_{eq}$ (kPa) represented by the following formula (1) :

$$P_{eq} = -80.8 + 98.2 \times [\beta-OH] + 68.0 \times [SO_3] + 0.0617 \times T \quad (1)$$

wherein $[\beta-OH]$ is the $\beta-OH$ value $(mm^{-1})$ of glass, $[SO_3]$ is the content (as represented by mass percentage based on oxides) of $SO_3$ in glass, and T is the temperature (°C) of the molten glass.

2. The glass production process according to Claim 1, wherein the glass to be produced further contains at least one member selected from the following group:

   F, Cl, V, Cr, Mn, Co, Ni, Cu, Se, Mo, Ag, In, Te, La, Pr, Nd, Er, W and Au

3. The glass production process according to Claim 1 or 2, wherein in the glass to be produced, the ratio of FeO based on the whole iron is from 20 to 90%, as represented by the following formula:

$$FeO/(FeO+Fe_2O_3) \times 100$$

   wherein FeO and $Fe_2O_3$ represent contents (as represented by mass percentage based on oxides) of FeO and $Fe_2O_3$, respectively, as calculated as $Fe_2O_3$ in the glass to be produced.

4. The glass production process according to Claim 2 or 3, wherein the glass to be produced contains from 0.05 to 0.5% of NiO as represented by mass percentage based on oxides.

5. The glass production process according to any one of Claims 2 to 4, wherein the glass to be produced contains Se, and the ratio of Se remaining in the glass to be produced is from 30 to 60% based on Se introduced as a glass material.

# F i g.1

Fig.2

EP 2 000 440 A2

**EP 2 000 440 A2**

**Patent documents cited in the description**

- JP 2006085698 A